# EUROPEAN PATENT APPLICATION

(11) **EP 3 786 661 A1**
(43) Date of publication of application: **03.03.2021**
(21) Application number: 19193674.9
(22) Date of filing: 27.08.2019
(51) Int. Cl.: G01S 7/481

(54) **A PHASE DIFFERENCE MEASUREMENT DEVICE FOR OPTICAL PHASED ARRAYS**

(71) Applicant: Imec VZW, 3001 Leuven (BE)
(72) Inventor: FIGEYS, Bruno, 3001 Leuven (BE); ROTTENBERG, Xavier, 3001 Leuven (BE); JANSEN, Roelof, 3001 Leuven (BE)
(74) Representative: AWA Sweden AB

(57) **Abstract**

The present invention provides a phase difference measurement device (1) for optical phased arrays, the phase difference measurement device (1) comprising at least two optical waveguides (2) arranged in parallel in a first plane, each optical waveguide (2) comprising a proximal portion (3a) and a distal portion (3b); the proximal portion (3a) of the at least one of the two optical waveguides (2) further comprises a phase shifting device (4) configured for inducing a phase shift of a light wave being transmitted in the phase difference measurement device (1). The device (1) further comprises at least one phase interrogator device (5) arranged in the first plane (8a) between two neighbouring optical waveguides (2) of the at least two optical waveguides (2); the phase interrogator device (5) being configured to couple light from the two neighbouring optical waveguides (2) to interfere in the phase interrogator (5) to generate an interference light wave (5e); and at least one photo detector (6) arranged for detecting the interference light wave (5e), wherein the least one photo detector (6) is arranged in a second plane (8b) other than the first plane (8a).

## Description

### Technical field

The present inventive concept relates to the field of optical phased arrays.

More particularly it relates to a device for measuring the phase difference between waveguides in an optical phased array.

### Background

Optical phased arrays are relevant devices for beam former and holography applications. Among other applications, an optical beam former can be used as a key component of a Light detection and ranging (LiDAR) system. LiDAR is currently becoming an important technology for implementation in autonomous vehicles.

A phased array consists of an array of antennas that emit waves which will interfere with one another. The waves may for example be acoustic waves or electromagnetic waves. By controlling the phase of the waves emitted by the different antennas, the wave front of the wave can be designed to be focusing in a spot in the near-field of the antenna array. However, phased arrays are often designed to emit light in a well-defined direction, and this direction may be controlled or changed by controlling the phase of the waves being emitted by the antennas. In practice, amplitude modulation of the waves emitted by the different antennas can be used to further optimize the achieved beam.

Recently, research has been conducted towards the development of Complementary metal-oxide-semiconductor (CMOS) compatible optical phased arrays with integrated photonics to miniaturize such systems.

Key to such phased arrays is to have accurate control over the phase of the light being emitted by the antennas, since loss of phase control results in noise in the far-field pattern. However, typical waveguide architectures for addressing the different antennas introduce phase errors due to fabrication imperfections, thereby leading to accumulation of phase errors, which can lead to noise in the farfield.

As an example, document WO2018160729 discloses a three-dimensional (3D) optical sensing system for a vehicle. A presented approach for the steering mechanism is the use an optical phased array of optical micro antennas or emitters. In the phased array of optical micro antennas, each antenna may be made by etching a grating into a waveguide that radiates the light out of the waveguide.

There is however a need in the art for improved CMOS compatible optical phased arrays.

### Summary

It is an object of the invention to at least partly overcome one or more limitations of the prior art. In particular, it is an object to provide a phase difference measurement device for optical phased arrays.

As a first aspect of the invention, there is provided a phase difference measurement device for optical phased arrays, the phase difference measurement device. The device comprises
- at least two optical waveguides arranged in parallel in a first plane, each optical waveguide comprising a proximal portion and a distal portion;
- the proximal portion of the at least one of the two optical waveguides further comprises a phase shifting device configured for inducing a phase shift of a light wave being transmitted in the phase difference measurement device;
- at least one phase interrogator device arranged in the first plane between two neighbouring optical waveguides of the at least two optical waveguides; the phase interrogator device being configured to couple light from the two neighbouring optical waveguides to interfere in the phase interrogator to generate an interference light wave; and
- at least one photo detector arranged for detecting the interference light wave, wherein the least one photo detector is arranged in a second plane other than the first plane.

The phase difference measurement device is thus for measuring the phase difference between two optical waveguides. An optical waveguide is thus suitable for transmitting electromagnetic waves. One, several or all optical waveguides of the at least two optical waveguides may comprise SiN.

The at least two optical waveguides are further arranged in parallel in a first plane. However, the optical waveguides may have other portions that are not arranged in parallel or arranged in other planes. The at least two optical waveguides may be straight or bent, or comprise both straight or bent portions.

The optical waveguides may have a cross-section that is less than 1 µm, such as less than 500 nm.

The optical waveguides may further be silicon waveguides having an oxide cladding (SOI).

Each waveguide comprises a first and second end. Thus, each waveguide has a proximal and distal portion, wherein the proximal portion is arranged at the first end and the distal portion is arranged at the second end. The proximal portion of the at least one of the two optical waveguides further comprises a phase shifting device configured for inducing a phase shift of a light wave being transmitted in the optical waveguides. The phase shifting device may be a tuneable phase-shifting device, meaning that the degree of phase shift may be varied.

Not all optical waveguides of the at least two optical waveguides need to have such a phase shifting device. The phase shifting device may thus be configured to change the phase of incoming light at the proximal portion of the optical waveguide.

Furthermore, there is at least one phase interrogator device arranged in the first plane between two neighbouring optical waveguides. The phase interrogator device is configured to couple light from each respective optical waveguide an allow them to interfere. This thus generates an interference light wave in the phase interrogator device. The phase interrogator device may thus in itself be a waveguide, such as a single mode waveguide or a multimode waveguide or any other sub-component in which interference can take place. Consequently, the phase interrogator is configured such that a fraction of the light waves being transmitted in two neighbouring optical waveguides is tapped off from the waveguides and interfered.

Moreover, the phase difference measurement device comprises a photo-detector arranged in a second plane which is a plane different than the first plane. The photodetector is thus configured to measure the intensity of the interference light wave, and the amplitude of detected interference light is related to the phase difference of the two neighbouring optical waveguides. The photo-detector may be configured for converting the light intensity to an electrical signal.

The first aspect of the invention is based on the insight that is it valuable to measure the phase difference between neighbouring waveguides, since this may be used to control how much the light wave in one or several optical waveguides are to be shifted. If the phase difference measurement device is used in a phased array, it facilitates achieving the desired angular precision. Furthermore, by having the photo-detector for detecting the interference light wave out-of-plane, i.e. in another plane than the optical waveguides and the phase interrogator, the whole phase difference measurement device may be manufactured with a more compact design, thereby making the whole phase difference measurement device suitable in a CMOS compatible optical phased array. The first aspect of the invention thus provides a miniaturized component intended to measure the phase difference between two light waves in two different waveguides.

In embodiments of the first aspect of the invention, the phase difference measurement device is further comprising a control unit configured for controlling the at least one phase shifting device such that the phase is shifted with a value based on information of the detected interference light wave in the at least one photo detector.

Thus, the control unit allows for a feedback control, i.e. for controlling the amount of phase shift applied based on the actual measured phase shift in the optical waveguides. This s valuable since it may reduce the risk phase errors due to fabrication imperfections of the optical waveguides.

The control unit may thus be configured to receive a signal corresponding to the intensity of the light detected in the photo-detector and further be configured to control the degree of phase shift in one or several phase shifters.

As an example, there may be one control unit per phase interrogator device. Alternatively, a single control unit is configured to control several phase shifters and also configured for receiving information from several photo-detectors.

The control unit may comprise a processor and communication interface for communicating with photo detectors and phase shifters and for receiving information from photo detectors. Hence, the control unit may further comprise computer program products configured for sending operational requests to one or several phase shifters. The operational requests may be based on analysis of received data from one or several photo-detectors. For this purpose, the control unit may comprise a processing unit such as a central processing unit, which is configured to execute computer code instructions which for instance may be stored on a memory.

As an example, the control unit may be configured to control the at least one phase shifting device such that the phase shift between the at least two optical waveguides is kept within a predefined interval.

Thus, the control unit may be used for steering the degree of phase shifting such that it is kept within an interval, such as at a reference value, below a reference value or above a reference value.

As an example, the control unit may comprise integrated circuits constructed by CMOS technology.

Thus, the control unit may be manufactured by CMOS technology and may thus comprises logic operations such that the phase shifter or phase shifting devices are driven by the integrated circuits constructed by CMOS technology.

In embodiments of the first aspect, the at least one phase interrogator device is configured for directing the interfered light in a direction toward the at least one photodetector in the second plane.

Thus, since the phot-detector is arranged out-of-plane from the phase interrogator, the phase interrogator itself may be configured for directing the interference light wave to the photo-detector.

As an example, the at least one phase interrogator may comprise a reorientation portion in the form of a grating mirror or a lattice of scatterers for scattering the interfered light wave toward the at least one photo detector in the second plane.

The reorientation portion may be an area consisting of well-defined scatterers, such as a periodic lattice of scatterers, for directing the interference light waves to the photo-detectors.

In embodiments of the first aspect of the invention, the at least one photo-detector comprises a pn-diode.

The pn-diode comprise a p-n junction and may be configured to operate in reverse bias condition. As an example, the pn-diode may be a silicon pn-photodetector. This may be useful for wavelengths that are absorbed by silicon, such as wavelengths between 300 nm - 1000 nm. As an example, the detector may be configured for detecting light having a wavelength of about 905 nm, meaning that also the waveguides of the phase difference measurement device may be configured for transmitting light waves of this wavelength.

Alternatively, the at least one photodetector may comprise Ge on Si. Such detectors may be useful in NIR applications, such as for wavelengths between 1300 and 1550 nm.

In embodiments of the first aspect, at least one phase shifting device of the at least two optical waveguides is a thermo-optic phase shifter. The thermo-optic phase shifter may be configured to thermally change the refractive index of the material in the optical pathway in the phase shifter, thereby providing a modulation of the light wave, such as a phase shift. The thermo-optic phase shifter may thus comprise a resistance heater thermally coupled to the high index core of a silica waveguide.

However, it is to be understood that other types of phase shifting devices may be used in the phase difference measurement device of the first aspect.

The optical waveguides and the phase interrogators may be arranged such that a light wave being transmitted in at least one optical waveguide is coupled into two phase interrogator devices, one on each side of the waveguide.

Thus, in embodiments of the first aspect, the phase difference measurement device comprises a plurality of optical waveguides and wherein there is a phase interrogator device arranged between each two neighbouring optical waveguides.

Thus, there plurality of optical waveguides and the phase interrogator devices may be alternatively arranged in the first plane.

As an example, the phase difference measurement device comprises at least 100, such as at least 1000, optical waveguides with phase interrogator devices arranged in between each two optical waveguides.

As an alternative, phase difference measurement device may comprise a number of phase interrogator devices such that there is less than a phase interrogator device arranged between each two neighbouring optical waveguides. Thus, only a few of the induced phase shifts of induced within the whole device may be measured and in some embodiments also controlled. As an example, the phase difference measurement device may comprise a plurality of optical waveguides and X number phase shifting devices. The number of phase interrogators may then be less than X-1, such as less than X-10, such as less than X/2.

As a further example, the plurality of optical waveguides may extend from the proximal portion to the distal portion in an X direction, and further wherein two adjacent phase interrogators are arranged in the first plane at different positions along the X direction.

By arranging the phase interrogators at different positions in the X direction, the whole phase difference measurement device may be more compact.

As a second aspect of the invention, there is provided a phased array comprising
- at least one phase difference measurement device according to the first aspect of the invention;
- an optical antenna arranged on each distal portion of the optical waveguides of the at least one phase difference measurement device;
- a receiving waveguide for receiving light waves that are to be transmitted by the optical phased array,
- a coupling arrangement for transmitting and splitting the light waves received by the receiving waveguide to the phase shifting devices of the at least one phase difference measurement device.

This aspect may generally present the same or corresponding advantages as the former aspect. Effects and features of this second aspect are largely analogous to those described above in connection with the first aspect. Embodiments mentioned in relation to the first aspect are largely compatible with the second aspect.

The phased array may be suitable for emitting light waves in well-defined directions, depending on the phase of the light waves being emitted by the antennas, i.e. depending on the degree of phase shift applied by the phase shifting devices of the phase difference measurement devices. By controlling the phase shift between neighbouring waveguides with the phase interrogator devices, the number of errors of the emitted light waves in the farfield may be decreased.

As an example, the optical antennas may be leaky wave antennas (LWA). The optical antennas may comprise waveguide having protrusions from which the light is emitted.

The receiving waveguide is configured for receiving light that are to be transmitted by the antenna. Between the receiving waveguide and the phase difference measurement devices, there is a coupling arrangement, which is used as a splitter tree for splitting the receiving light in a number of paths, such that one path for each phase shifting device.

As an example, the coupling arrangement may comprise a plurality of optic couplers configured for splitting light waves into at least two paths.

The optic couplers may for example be 1×2 port multi-mode interference (MMI) couplers.

The phased array may comprise at least 100, such as at least1000 optical antennas. The phased array may thus be suitable for use in a Light detection and ranging (LiDAR) system.

As a third aspect of the invention, there is provided a LiDAR system for measuring the distance to a target, the system comprising
- a light source for generating light waves for illuminating the target;
- an optical phased array according to the second aspect above for controlling the illumination direction of the light waves generated by the light source; and
- a sensor device for measuring the reflected light of the emitted light waves from the target.

This aspect may generally present the same or corresponding advantages as the former aspects. Effects and features of this third aspect are largely analogous to those described above in connection with the first and second aspects. Embodiments mentioned in relation to the first and second aspects are largely compatible with the second aspect.

The LiDAR system may be suitable for use in an autonomous car for measuring the distance to objects around the car.

The light source may for example be a laser light source. As an example, the light source may be configured for generating light waves having a wavelength between 300 nm-1000 nm, such as wavelengths around 905 nm. The light source is further arranged for generating light that is received by the receiving wave guide of the phased array.

The sensor device may comprise photo-detectors for detecting the reflected light from the target.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 is a schematic illustration of a phase difference measurement device for optical phased arrays according to an embodiment of the present disclosure.
Fig. 2 is a schematic illustration of a phase difference measurement device for optical phased arrays according to an embodiment of the present disclosure.
Fig. 3a is a schematic illustration of a phase difference measurement device comprising a control unit.
Fig. 3b is a side view of a phase difference measurement device manufactured by CMOS technology.
Fig. 4 is a schematic illustration of an optical phased array according to an embodiment of the present disclosure.
Fig. 5 is a schematic illustration of an LWA that may be used in an optical phased array.
Fig. 6 is a close-up view of the optical phased array of Fig. 4.

### Detailed description

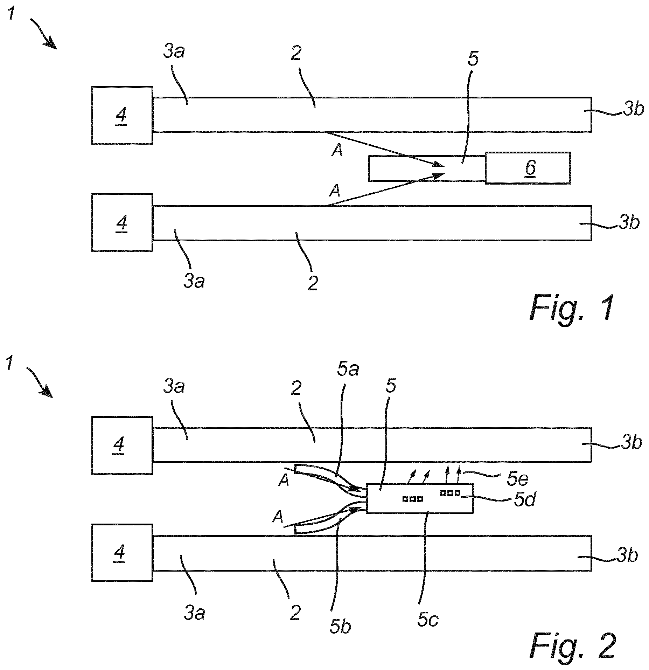

Fig. 1 shows a top view of an embodiment of a phase difference measurement device 1 for optical phased arrays according to an embodiment of the present disclosure. The phase difference measurement device 1 comprises two optical waveguides 2 arranged in parallel in a first plane. Each optical waveguide 2 comprises a proximal portion 3a and a distal portion 3b. Thus, light transmitted in a waveguide 2 may be guided from the proximal portion 3a to the distal portion 3b. The proximal portion 3a of the both optical waveguides further comprise a phase shifting device 4 configured for inducing a phase shift of a light wave being transmitted in the phase difference measurement device 1.

The two phase shifting devices may be thermo-optic phase shifters, and may be configured for shifting the phase of the light waves such that a light wave transmitted in one of the waveguides has a different phase compared to a light wave being transmitted in the other waveguide.

There is further a phase interrogator device 5 arranged in the same plane as the optical waveguides two and in between the waveguides 2. The phase interrogator device 5 is configured to couple light from each respective optical waveguide 2, as indicated by arrows "A" in Fig. 1, and allow them to interfere in the phase interrogator 5 to generate an interference light wave. The phase interrogator 5 may thus be positioned at a distance from the two optical waveguides such that light from both waveguides may be coupled into the phase interrogator device 5. The detector 6 of the device 1 is arranged out-of-plane, i.e. in a second plane other than the first plane in which the optical waveguides and the phase interrogator is arranged. The phase interrogator 5 may also be configured to direct the interference light wave to the photo-detector; i.e. it may be arranged to extend in both the first and second plane.

Consequently, the phase difference measurement device 1 is arranged so that the interference light wave from the phase interrogator 5 is sent to a detector that is placed remote from the closely spaced optical waveguides. The amplitude of detected interference light wave in the photo-detector 6 is related to the phase difference and may thus be used for measuring the phase difference between the light waves being transmitted in the two optical waveguides 2.

Fig. 2 shows a further embodiment of a phase difference measurement device 1 of the present disclosure. In this embodiment, the phase interrogator 5 is in itself a waveguide having a Y-shape. The phase interrogator thus comprises a central portion 5c and two arms 5a, 5b, arranged in the first plane such that a first arm 5 is closer to one of the optical waveguides 2 whereas a second arm 5b is closer to the other optical waveguide 2. The arms 5a and 5b are thus arranged such that a fraction of the optical power of light waves being transmitted in the optical waveguides 2 may be tapped off. The light that has been coupled into the phase interrogator 5, indicated by arrows "A", is then allowed to interfere in the central portion 5c and then sent to detector 6. The arms 5a and 5c of the Y-shaped phase interrogator device 5 are in this example bent in the first plane, such as forming an S-shape in the first plane. However, the arms 5a and 5b could also have a straight shape. Furthermore, the phase interrogator 5 is configured for directing the interfered light wave 5e in a direction toward a photodetector (not shown in Fig. 2) in the second plane. In order to do this, the phase interrogator 5 comprises reorientation portion 5d, which could for example be a grating mirror or a lattice of scatterers.

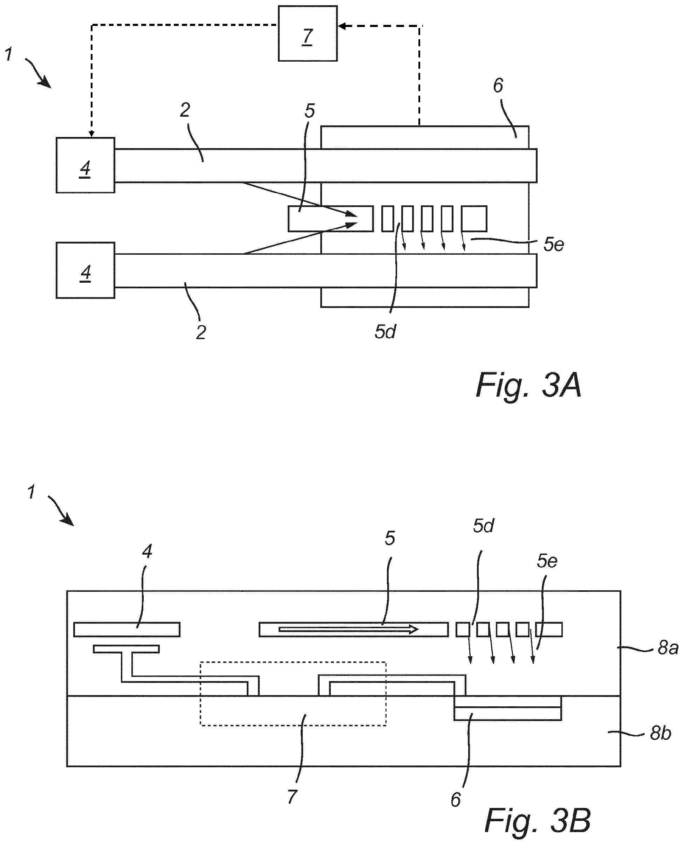

Fig. 3a shows an embodiment of a phase difference measurement device 1 that also comprises a control unit 7. The device 1 functions as discussed in relation to Figs 1 and 2 above, i.e. a fraction of the light is tapped off from the waveguides 2, interfered in the phase interrogator 5, directed from a lattice structure in the reorientation portion 5d of the phase interrogator 5 to a detector 6 arranged in another plane for measuring the optical intensity. Information of the optical intensity is sent as an electric signal to the control unit 7, which is configured for controlling the phase shifting devices 4 such that the phase is shifted with a value based on information of the detected interference light wave in the photo detector 6. Thus, based on the received information, the control unit 7 may send signals to the phase shifting devices 4, thereby forming part of a feedback loop for controlling the amount of phase shift applied by the phase shifting devices 4. The control unit 7 is thus configured to carry out a method for regulating the phase shift based on received information from the photo detector 6. For this purpose, the control unit 7 may comprise a device having processing capability in the form of processing unit, such as a central processing unit, which is configured to execute computer code instructions which for instance may be stored on a memory. The memory may thus form a computer-readable storage medium for storing such computer code instructions. The processing unit may alternatively be in the form of a hardware component, such as an application specific integrated circuit, a field-programmable gate array or the like. The processing unit may further comprise computer code instructions for sending operational requests to the phase shifting devices 4.

Measuring the phases or phase differences by the control unit 7 may be performed continuously or at discrete time points. The control unit may be configured to measure the phase difference at discrete time points, and if the phase difference need to be adjusted, operational requests may be sent to the phase shifting devices 4. The control unit 7 may thus be configured to control the phase shifting devices 4 such that the phase shift between the two optical waveguides is kept within a predefined interval.

Fig. 3b shows a side view an embodiment of a phase difference measurement device 1 partly manufactured using CMOS technology. The device 1 comprises a first layer 8a in which the optical waveguides 2, the phase shifting devices 4 in the form of and the phase interrogator 5 is arranged. Beneath this layer, there is a second layer 8b in the form of a silicon layer. The photo-detector 6 in the form of a pn-diode is arranged in the second layer 9. The control unit 7 is in this example in the form of integrated circuits arranged in the second layer 8b. The integrated circuits may thus be manufactured using CMOS and may be configured to perform logic operations, thereby functioning as a feedback control. The logic operations may thus be used to regulate the phase shifting devices 4 based on the detected light intensity of the photo detector 6, i.e. based on the amount of detected interference light waves 5e. In other words, the phase shifting devices, such as thermo-optic phase shifter, may be driven by the CMOS.

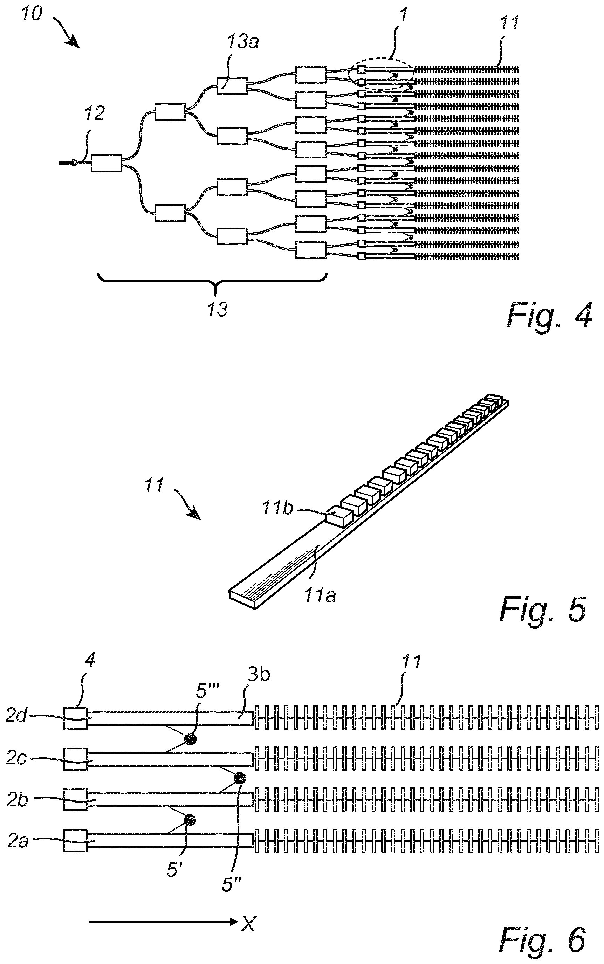

Fig. 4 shows an embodiment of a phased array 10, such as an optical phased array (OPA), which comprises a phase difference measurement device 1 as discussed in relation to Figs. 1-3 above. The phase difference measurement device 1 comprises a plurality of optical waveguides 2 and there is a phase interrogator device 5 arranged between each two neighbouring optical waveguides 2. Further, there is an optical antenna 11 arranged on each distal portion of the optical waveguides. The optical antenna function as radiating element that couples the receiving light into free space. Radiated light by the optical antennas may be combined in the far-field, and by adjusting the relative phase shift between the light being transmitted to the different antennas 11, a beam can be formed and steered.

The optical antenna 11 may be a leaky wave antenna (LWA), which is further illustrated in Fig. 5. Such a LWA 11 may comprise an elongated waveguide portion 11a and a plurality of protrusions 11b at the most distal end of the elongated waveguide portion 11a. The protrusions 11 b are for effectively emitting the light being transmitted to the LWA 11 (more info on antenna?).

The phased array 10 further comprises a receiving waveguide 12 for receiving light waves that are to be transmitted by the optical phased array 1 as well as a coupling arrangement 13 for transmitting and splitting the light waves received by the receiving waveguide 12 to the phase shifting devices 4 of the phase difference measurement device 1.

The coupling arrangement 13 comprises a plurality of optic couplers 13a, each configured for splitting the receiving light waves two paths. Thus, the coupling arrangement 13 functions as a power splitting tree such that light waves being received by the single receiving waveguide 12 is split into several branches, and each branch is then fed to a tuneable phase shifting device 4, such that the receiving light is distributed to each optical antenna 11.

By use of the phase difference measurement device 1, the phase difference between optical signals of two adjacent waveguides in the OPA architecture may be measured and controlled. As discussed in above, the Differential phase between antennas is measured using interferometry. This is advantageous in that the phase of the light waves transmitting by the array may be controlled in a more accurate way, and hence, the direction of the light waves being emitted by the antennas 11 may be controlled in a more accurate way.

In embodiments, the phased array 10 also comprises a light source (not shown in Fig. 4), such as a laser, arranged for generating and transmitting a light wave to the receiving waveguide 12. The laser may be configured for generating light waves having a wavelength that is between 300 nm - 1000 nm, such as wavelengths around 905 nm.

The phase difference measurement device 1 of the phased array 10 forms a compact structure. The plurality of optical waveguides 2 extend from the proximal portion to the distal portion in an X direction. This is illustrated in the close-up view of Fig. 6, which shows a portion of the phase difference measurement device 1 of the phased array 10 of Fig. 4. As seen in Fig. 6, two adjacent phase interrogators 5 are arranged in the first plane at different positions along the X direction. Thus, the phase interrogator 5' arranged for coupling light from optical waveguides 2a and 2b is arranged at a first position X1 along the X direction, whereas phase interrogator 5" arranged for coupling light from optical waveguides 2b and 2c is arranged at a second position X2 along the X direction. Further, the phase interrogator 5'" arranged for coupling light from optical waveguides 2c and 2d is arranged at the first position X1 along the X direction. Consequently, the phase interrogators 5 are alternatively arranged at a first and second position along the X axis so as to form a more compact structure.

In some embodiments, it may be useful to know what the power of the light in an optical waveguide 2 is. This can be achieved by sweeping the phase shift in one of the optical waveguides with a phase shifting device earlier in the tree of the phased array 10. By sweeping the phase over 2pi phase shift one will always measure the case of constructive interference and thereby be able to calibrate the actual power in the optical waveguide 2. The minimum measured power in such a phase shift sweep may allow evaluation of the imbalance in the power distribution, which may be an important parameter in the design of phase shifting device. This may facilitate not only modulating the phase of the light sent to the different antennas, but to also actively vary the amplitude, if suitable amplitude modulators are included in the splitting tree 13.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A phase difference measurement device (1) for optical phased arrays, the phase difference measurement device (1) comprising
- at least two optical waveguides (2) arranged in parallel in a first plane, each optical waveguide (2) comprising a proximal portion (3a) and a distal portion (3b);
- the proximal portion (3a) of the at least one of the two optical waveguides (2) further comprises a phase shifting device (4) configured for inducing a phase shift of a light wave being transmitted in the phase difference measurement device (1);
- at least one phase interrogator device (5) arranged in the first plane (8a) between two neighbouring optical waveguides (2) of the at least two optical waveguides (2); the phase interrogator device (5) being configured to couple light from the two neighbouring optical waveguides (2) to interfere in the phase interrogator (5) to generate an interference light wave (5e); and
- at least one photo detector (6) arranged for detecting the interference light wave (5e), wherein the least one photo detector (6) is arranged in a second plane (8b) other than the first plane (8a).

2. The phase difference measurement device (1) according to claim 1, further comprising a control unit (7) configured for controlling the at least one phase shifting device (4) such that the phase is shifted with a value based on information of the detected interference light wave (5e) in the at least one photo detector (6).

3. The phase difference measurement device (1) according to claim 2, wherein the control unit (7) is configured to control the at least one phase shifting device (4) such that the phase shift between the at least two optical waveguides (2) is kept within a predefined interval.

4. The phase difference measurement device (1) according to claim 2 or 3, wherein the control unit (7) comprises integrated circuits constructed by CMOS technology.

5. The phase difference measurement device (1) according to any previous claim, wherein the at least one phase interrogator device (5) is configured for directing the interfered light in a direction toward the at least one photodetector (6) in the second plane (8b).

6. The phase difference measurement device (1) according to claim 5, wherein the at least one phase interrogator (5) comprises a reorientation portion (5d) in the form of a grating mirror or a lattice of scatterers for scattering the interfered light wave toward the at least one photo detector (6) in the second plane (8b).

7. The phase difference measurement device (1) according to any previous claim, wherein the at least one photo-detector (6) comprises a pn-diode.

8. The phase difference measurement device (1) according to any previous claim, wherein at least one phase shifting device (4) of the at least two optical waveguides (2) is a thermo-optic phase shifter.

9. The phase difference measurement device (1) according to any previous claim, wherein the device (1) comprises a plurality of optical waveguides (2) and wherein there is a phase interrogator device (5) arranged between each two neighbouring optical waveguides (2).

10. The phase difference measurement device (1) according to claim 9, wherein the plurality of optical waveguides (2) extend from the proximal portion (3a) to the distal portion (3b) in an X direction, and further wherein two adjacent phase interrogators (5) are arranged in the first plane at different positions along the X direction.

11. A phased array (10) comprising
- at least one phase difference measurement device (1) according to any one of claims 1-10;
- an optical antenna (11) arranged on each distal portion (3b) of the optical waveguides (2) of the at least one phase difference measurement device (1);
- a receiving waveguide (12) for receiving light waves that are to be transmitted by the optical phased array (10),
- a coupling arrangement (13) for transmitting and splitting the light waves received by the receiving waveguide (12) to the phase shifting devices (4) of the at least one phase difference measurement device (1).

12. A phased array (10) according to claim 11, wherein the optical antennas (11) are leaky wave antennas (LWA).

13. A phased array (10) according to claim 11 or 12, wherein the coupling arrangement (13) comprises a plurality of optic couplers configured for splitting receiving light waves into at least two paths.

14. A phased array (10) according to any one of claims 11-13, wherein the optical phased array (10) comprises at least 1000 optical antennas (11).

15. A LIDAR system (20) for measuring the distance to a target, the system (20) comprising
- a light source (21) for generating light waves for illuminating the target;
- an optical phased array (10) according to any one of claims 11-14 for controlling the illumination direction of the light waves generated by the light source; and
- a sensor device (22) for measuring the reflected light of the emitted light waves from the target.
